# EUROPEAN PATENT SPECIFICATION

(11) **EP 1 924 662 B1**
(45) Date of publication and mention of the grant of the patent: **26.11.2008**
(21) Application number: 06802228.4
(22) Date of filing: 24.08.2006
(51) Int. Cl.: C09D 133/06, C09D 133/14, C09D 201/00, C09D 5/00, C08K 5/5455, C08K 5/315, C08K 5/3492, C08L 61/20, C08L 61/28

(54) **COATING COMPOSITIONS WITH SILYLATED DIOLS**
BESCHICHTUNGSZUSAMMENSETZUNGEN MIT SILYLIERTEN DIOLEN
COMPOSITIONS DE REVÊTEMENT AVEC DES DIOLS SILYLÉS

(30) Priority: 15.09.2005 US 227867
(43) Date of publication of application: 28.05.2008
(73) Proprietor: BASF CORPORATION, Southfield, MI 48034-2442 (US)
(72) Inventor: GRANDHEE, Sunitha, Novi, MI 48375 (US); RAMESH, Swaminathan, Canton, MI 48187 (US)
(74) Representative: Fischer, Jens-Dieter W.E.
(86) International application number: PCT/US2006/033036
(87) International publication number: WO 2007/037857

(56) References cited:
- WO-A-00/66670
- WO-A-01/46320
- US-A- 4 093 673
- US-A- 4 371 657

## Description

### FIELD OF THE INVENTION

The invention relates to thermosetting coating compositions, materials for thermoset coating compositions, and methods of making and using such coatings compositions. In particular, the invention concerns glossy, thermosetting clearcoat compositions.

### BACKGROUND OF THE INVENTION

Curable, or thermosettable, coating compositions are widely used in the coatings art, particularly for topcoats in the automotive and industrial coatings industry. Color-plus-clear composite coatings provide topcoats with exceptional gloss, depth of color, distinctness of image, and special metallic effects. The automotive industry has made extensive use of these coatings for automotive body panels. A topcoat coating should be glossy for an attractive appearance and durable to maintain its appearance and provide protection under service conditions during the lifetime of the coated article. Topcoat coatings for automotive vehicles, for example, are typically exposed to all kinds of weather, ultraviolet rays from the sun, abrasions from gravel thrown up during driving or from items set on the car when parked, and other conditions that can degrade the coating.

For some time, researchers have directed their efforts to providing coatings with greater resistance to environmental etch. "Environmental etch" is a term applied to a kind of exposure degradation that is characterized by spots or marks on or in the finish of the coating that often cannot be rubbed out. Curable coating compositions utilizing carbamate-functional resins are described, for example, in U.S. Patent Nos. 5,693,724, 5,693,723, 5,639,828, 5,512,639, 5,508,379, 5,451,656, 5,356,669, 5,336,566, and 5,532,061 . These coating compositions can provide significant improvements in resistance to environmental etch over other coating compositions, such as hydroxy-functional acrylic/melamine coating compositions.

Clearcoat coatings must meet other requirements in addition to environmental etch resistance, such as scratch and mar resistance. As mentioned, it is also important for the clearcoat layer to contribute to the pleasing appearance of the finish by having a high gloss and excellent smoothness. It is thus desirable to improve resistance to scratching and increase gloss of a clearcoat.

US Patent Application 20050054767 describes a highly branched acrylic polymer in a coating that includes a silyl cross-linking group that produces highly cross-linked films. An acrylic clearcoat incorporating silane functionality and auxiliary crosslinkers for improved VOC, mar and environmental etch was disclosed in the Proceedings of the Waterborne, High solids and Powder Coatings Symposium (1995), pages 492-501. Barsotti et al., WO 9940140, describes silicon reactive oligomers and high solids spray-on coating compositions for automotive applications. Other publications such as US 5985463 and WO2000055229 describe acrylic polymers with silane cross-linking groups for low VOC, high hardness, and good gloss while US Patent Application 2001046301 and JP 97-323483 (JP-A-11 152 445) disclose use of silylated oligomers which can be useful to coat polycarbonates or glass.

"A" and "an" as used herein indicate "at least one" of the item is present; a plurality of such items may be present, when possible. "About" when applied to values indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates a possible variation of up to 5 % in the value.

### SUMMARY OF THE INVENTION

The present invention provides a curable clearcoat coating composition comprising from about 1% to about 10% by weight of a silylated dimer fatty alcohol diol, an acrylic polymer having active hydrogen-containing functional groups, and a crosslinker reactive with the acrylic polymer.

The invention also provides a method of coating a substrate including steps of applying the clearcoat coating composition of the invention and curing the applied layer of coating composition. In particular, the clearcoat coating composition may be applied in a layer over a basecoat coating layer. The basecoat coating layer may be cured along with the clearcoat coating layer applied over it.

The invention further provides a coated substrate having thereon a cured layer of the clearcoat composition of the invention.

"A" and "an" as used herein indicate "at least one" of the item is present; a plurality of such items may be present, when possible. "About" when applied to values indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates a possible variation of up to 5% in the value.

### DETAILED DESCRIPTION OF THE PREFERRED EMBODIMENTS

The following description of the preferred embodiment(s) is merely exemplary in nature and is in no way intended to limit the invention, its application, or uses.

The gloss of a curable clearcoat coating composition is increased by adding from about 1 % to about 10% by weight of a silylated dimer fatty alcohol diol.

Dimer fatty alcohol diol is a 36-carbon diol, commercially available as PRIPOL 2033 from Unichema North America, Chicago, III., USA. This long-chain or fatty alcohol may be readily produced by hydrogenation (reduction) of the corresponding dimer fatty acid. See, for example, Karlheinz Hill, "Fats and Oils as Oleochemical Raw Materials," Pure Appl. Chem., Vol. 72, No. 7, pp. 1255-1264 (2000) at page 1261.

The dimer fatty alcohol diol may be silylated by reaction with isocyanatoalkyltrialkoxysilane. Suitable examples of isocyanatoalkyltrialkoxysilane compounds include, without limitation, isocyanatopropyltrimethoxysilane, isocyanatopropylmethyldimethoxysilane, isocyanatopropylmethyldiethoxysilane, isocyanatopropyltriethoxysilane, isocyanatopropyltriisopropoxysilane, isocyanatopropylmethydiisopropoxysilane; isocyanatoneohexyltrimethoxysilane, isocyanatoneohexyldimethoxysilane, isocyanatoneohexydiethoxysilane, isocyanatoneohexyltriethoxysilane, isocyanatoneohexytriisopropoxysilane, isocyanatoneohexyldiisopropoxysilane, isocyanatoisoamyltrimethoxysilane, isocyanatoisoamyldimethoxysilane, isocyanatoisoamylmethyldiethoxysilane, isocyanatoisoamyltriethoxysilane, isocyanatoisoamyltriisopropoxysilane, and isocyanatoisoamylmethyldiisopropoxysilane. Many isocyanatoalkyltrialkoxysilane compounds are sold under the trademark SILQUEST by OSi Specialties, Inc., a subsidiary of Witco Corp.

The isocyanatopropylalkoxysilane preferably has a high purity, i.e. above about 95%, and is preferably free from impurities and/or additives, such as transesterification catalysts, which can promote side reactions. Examples of undesirable transesterification catalysts are acids, bases and organometallic compounds. For isocyanatopropyltrimethoxysilane, a purity of at least 98% is preferred. This may be accomplished by distilling commercially available isocyanatopropyltrimethoxysilane, available as SILQUEST.RTM. Y-5187 silane from Witco Corporation, to remove impurities such as (3-trimethoxysilylpropyl)methylcarbamate and others as well as inhibitors, catalysts and other additives.

The reaction of the isocyanatoalkyltrialkoxysilane compound with dimer fatty alcohol may be carried out using a tin catalyst such as dibutyltin dilaurate (DBTDL); dibutyltin oxide; dibutyltin dichloride; dibutyltin diacetate; dibutyltin dimaleate; dibutyltin dioctoate; dibutyltin bis(2-ethylhexanoate); tin acetate; tin octoate; tin ethylhexanoate; tin laurate. and so on, as well as combinations of tin catalysts. Other suitable catalysts include those sold under the trademark K-KAT® (zirconium, aluminum, or bismuth compounds); diazabicyclo[2,2,2]octane (DABCO); N,N-dimethylcyclohexylamine (DMCA); 1,8-diazabicyclo[5,4,0]-undec-7-ene (DBU); and 1,5-diazabicyclo[2,3,0]non-5-ene (DBN). The reaction may be carried out at a temperature of up to about 150° C., more preferably up to about 100° C. The reaction is followed by monitoring the infrared spectrum of the reaction mixture and noting the disappearance of the isocyanate peak at 2240 cm⁻¹.

The SiOR groups can react with polyols in the coating in exchange reactions. If the coating has compounds having amino compounds, the SiOR groups will react with these. In the case of moisture, the silanol groups easily lose water and form -Si-O-Si bridges.

The curable clearcoat coating composition comprising from about 1% to about 10% by weight of a silylated dimer fatty alcohol diol preferably further includes an acrylic polymer. The acrylic polymer comprises active hydrogen-containing functional groups that are reactive with a crosslinker in the clearcoat composition. Suitable active hydrogen-containing functional groups include, without limitation, hydroxyl functionality, acid functionality, carbamate functionality, terminal urea functionality, and combinations of these. In a preferred embodiment, the acrylic polymer has carbamate groups, hydroxyl groups, or both carbamate and hydroxyl groups. A carbamate group has a structure 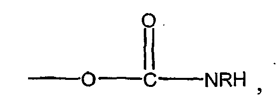 in which R is H or alkyl. Preferably, R is H or alkyl of from 1 to about 4 carbon atoms, and more preferably, R is H.

Hydroxyl-functional acrylic polymers are typically prepared by copolymerization of hydroxyl-containing monomers such as, for example and without limitation, hydroxyethyl acrylate, hydroxyethyl methacrylate, hydroxypropyl acrylate, hydroxypropyl methacrylate, hydroxybutyl acrylate, hydroxybutyl methacrylate, and hydroxyl-functional adducts thereof such as the reaction products of these with epsilon-caprolactone. Acid-functional acrylic polymers may be prepared by copolymerization with polymerizable unsaturated acids, for example and without limitation acrylic acid, methacrylic acid, and monoesters of maleic acid.

The carbamate functionality may be introduced to the polymer by either copolymerizing a carbamate-functional monomer or by reacting a functional group on the formed polymer in a further reaction to produce a carbamate group at that position. Acrylic monomers having a carbamate functionality in the ester portion of the monomer are well-known in the art and are described, for example in U.S. Pat. Nos. 3,479,328, 3,674,838, 4,126,747, 4,279,833, and 4,340,497, 5,356,669, and WO 94/10211 . One method of synthesis of such a monomer involves reaction of a hydroxy-functional monomer with cyanic acid (which may be formed by the thermal decomposition of urea) to form the carbamyloxy carboxylate (i.e., carbamate-modified (meth)acrylate). Another method of synthesis reacts an α,β-unsaturated acid ester with a hydroxy carbamate ester to form the carbamyloxy carboxylate. Yet another technique involves formation of a hydroxyalkyl carbamate by reacting a primary or secondary amine or diamine with a cyclic carbonate such as ethylene carbonate. The hydroxyl group on the hydroxyalkyl carbamate is then esterified by reaction with acrylic or methacrylic acid to form the monomer. Other methods of preparing carbamate-modified acrylic monomers are described in the art, and can be utilized as well. The acrylic monomer can then be polymerized along with other ethylenically unsaturated monomers, if desired, by techniques well known in the art.

The carbamate functionality may also be introduced to the acrylic polymer by conversion of another functional group to carbamate, as described in U.S. Pat. No. 4,758,632 One technique involves thermally decomposing urea (to give off ammonia and HNCO) in the presence of a hydroxy-functional acrylic polymer to form a carbamate-functional acrylic polymer. Another technique involves reacting the hydroxyl group of a hydroxyalkyl carbamate with the isocyanate group of an isocyanate-functional acrylic or vinyl monomer to form the carbamate-functional acrylic. Isocyanate-functional acrylics are known in the art and are described, for example in U.S. Pat. No. 4,301,257. Isocyanate vinyl monomers are well known in the art and include unsaturated m-tetramethyl xylene isocyanate and isocyanatoethyl methacrylate. Preferably, an isocyanate-functional acrylic polymer is reacted with hydroxyethyl carbamate, hydroxypropyl carbamate, hydroxybutyl carbamate, or mixtures thereof. Yet another technique is to react the cyclic carbonate group on a cyclic carbonate-functional acrylic with ammonia in order to form the carbamate-functional acrylic. Cyclic carbonate-functional acrylic polymers are known in the art and are described, for example, in U.S. Pat. No. 2,979,514. Another technique is to transcarbamylate a hydroxy-functional acrylic polymer with an alkyl carbamate. This is accomplished by use of a tin catalyst like dibutyl dioxide or butanestannoic acid and removing the byproduct alcohol to shift the equilibrium to the right; see, e.g., US patent 5552497. A more difficult, but feasible way of preparing the polymer would be to trans-esterify an acrylate polymer with a hydroxyalkyl carbamate..

Carbamate functionality can also be introduced to the acrylic polymer by reacting the polymer with a compound that has a group that can be converted to a carbamate, and then converting that group to the carbamate. Examples of suitable compounds with groups that can be converted to a carbamate include, without limitation, active hydrogen-containing cyclic carbonate compounds (e.g., the reaction product of glycidol and CO₂) that are convertible to carbamate by reaction with ammonia, monoglycidyl ethers and esters convertible to carbamate by reaction with CO₂ and then ammonia, allyl alcohols where the alcohol group is reactive with isocyanate functionality and the double bond can be converted to carbamate by reaction with peroxide, and vinyl esters where the ester group is reactive with isocyanate functionality and the vinyl group can be converted to carbamate by reaction with peroxide, then CO₂, and then ammonia. Any of the above compounds can be utilized as compounds containing carbamate groups rather than groups convertible to carbamate by converting the group to carbamate prior to reaction with the polymer.

The acrylic polymer may be polymerized with one or more ethylenically unsaturated comonomers. Such monomers for copolymerization are known in the art. They include alkyl esters of acrylic or methacrylic acid, e.g., ethyl acrylate, butyl acrylate, 2-ethylhexyl acrylate, butyl methacrylate, isodecyl methacrylate, hydroxyethyl methacrylate, hydroxypropyl acrylate, and the like; and vinyl monomers such as unsaturated m-tetramethyl xylene isocyanate, styrene, vinyl toluene and the like. Suitable comonomers also include monomer having other functionalities, including hydroxyl, acid, and epoxide functionalities.

The acrylic polymers may be polymerized using one or more further comonomers. Examples of such comonomers include, without limitation, esters of α,β-ethylenically unsaturated monocarboxylic acids containing 3 to 5 carbon atoms such as acrylic, methacrylic, and crotonic acids and of α,β-ethylenically unsaturated dicarboxylic acids containing 4 to 6 carbon atoms: vinyl esters, vinyl ethers, vinyl ketones, and aromatic or heterocyclic aliphatic vinyl compounds. Representative examples of suitable esters of acrylic, methacrylic, and crotonic acids include, without limitation, those esters from reaction with saturated aliphatic and cycloaliphatic alcohols containing 1 to 20 carbon atoms, such as methyl, ethyl, propyl, isopropyl, n-butyl, isobutyl, tert-butyl, 2-ethylhexyl, lauryl, stearyl, cyclohexyl, trimethylcyclohexyl, tetrahydrofurfuryl, stearyl, sulfoethyl, and isobornyl acrylates, methacrylates, and crotonates. Representative examples of other ethylenically unsaturated polymerizable monomers include, without limitation, such compounds as dialkyl fumaric, maleic, and itaconic esters, prepared with alcohols such as methanol, ethanol, propanol, isopropanol, butanol, isobutanol, and tert-butanol. Representative examples of polymerization vinyl monomers include, without limitation, such compounds as vinyl acetate, vinyl propionate, vinyl ethers such as vinyl ethyl ether, vinyl and vinylidene halides, and vinyl ethyl ketone. Representative examples of aromatic or heterocyclic aliphatic vinyl compounds include, without limitation, such compounds as styrene, .alpha.-methyl styrene, vinyl toluene, tert-butyl styrene, and 2-vinyl pyrrolidone. The comonomers may be used in any combination.

The acrylic polymers may be prepared using conventional techniques, such as by heating the monomers in the presence of a polymerization initiating agent and optionally chain transfer agents. The polymerization is preferably carried out in solution, although it is also possible to polymerize the acrylic polymer in bulk. Suitable polymerization solvents include, without limitation, esters, ketones, ethylene glycol monoalkyl ethers and propylene glycol monoalkyl ethers, alcohols, and aromatic hydrocarbons.

Typical initiators are organic peroxides such as dialkyl peroxides such as di-t-butyl peroxide, peroxyesters such as t-butyl peroctoate and t-butyl peracetate, peroxydicarbonates, diacyl peroxides, hydroperoxides such as t-butyl hydroperoxide, and peroxyketals; azo compounds such as 2,2'azobis(2-methylbutanenitrile) and 1,1'-azobis(cyclohexanecarbonitrile); and combinations of these. Typical chain transfer agents are mercaptans such as octyl mercaptan, n- or tert-dodecyl mercaptan; halogenated compounds, thiosalicylic acid, mercaptoacetic acid, mercaptoethanol, and dimeric alpha-methyl styrene.

The solvent or solvent mixture is generally heated to the reaction temperature and the monomers and initiator(s) and optionally chain transfer agent(s) are added at a controlled rate over a period of time, typically from about two to about six hours. The polymerization reaction is usually carried out at temperatures from about 20° C. to about 200° C. The reaction may conveniently be done at the temperature at which the solvent or solvent mixture refluxes, although with proper control a temperature below the reflux may be maintained. The initiator should be chosen to match the temperature at which the reaction is carried out, so that the half life of the initiator at that temperature should preferably be no more than about thirty minutes, more preferably no more than about five minutes. Additional solvent may be added concurrently. The mixture is usually held at the reaction temperature after the additions are completed for a period of time to complete the polymerization. Optionally, additional initiator may be added to ensure complete conversion of monomers to polymer.

The acrylic polymers should have a weight average molecular weight of at least about 2000, preferably at least about 3000, more preferably at least about 3500, and particularly preferably at least about 4000. Weight average molecular weight may be determined by gel permeation chromatography using polystyrene standard. In addition, the weight average molecular weight, equivalent weight of the functional group used for crosslinking, and the glass transition temperature of the polymer are tailored to suit the particular coatings application.

The clearcoat coating composition preferably includes from about 20% to about 80%, more preferably from about 35% to about 60% by weight of the acrylic polymer having carbamate functionality, based on the vehicle weight. The "vehicle weight" is the total weight of the thermoset, film-forming components in the coating composition.

The coating composition also includes a crosslinker reactive with the acrylic polymer. Examples of suitable crosslinkers include, without limitation, aminoplasts. An aminoplast for purposes of the invention is a material obtained by reaction of an activated nitrogen with a lower molecular weight aldehyde, optionally further reacted with an alcohol (preferably a mono-alcohol with one to four carbon atoms) to form an ether group. Preferred examples of activated nitrogens are activated amines such as melamine, benzoguanamine, cyclohexylcarboguanamine, and acetoguanamine; ureas, including urea itself, thiourea, ethyleneurea, dihydroxyethyleneurea, and guanylurea; glycoluril; amides, such as dicyandiamide; and carbamate functional compounds having at least one primary carbamate group or at least two secondary carbamate groups. Other useful crosslinkers include curing agents that have isocyanate groups, particularly blocked isocyanate curing agents, curing agents that have epoxide groups, amine groups, acid groups, siloxane groups, cyclic carbonate groups, and anhydride groups; and mixtures thereof. Examples of preferred curing agent compounds include, without limitation, melamine formaldehyde resin (including monomeric or polymeric melamine resin and partially or fully alkylated melamine resin), blocked or unblocked polyisocyanates (e.g., TDI, MDI, isophorone diisocyanate, hexamethylene diisocyanate, and isocyanurates of these, which may be blocked for example with alcohols or oximes), urea resins (e.g., methylol ureas such as urea formaldehyde resin, alkoxy ureas such as butylated urea formaldehyde resin), polyanhydrides (e.g., polysuccinic anhydride), and polysiloxanes (e.g., trimethoxy siloxane). Another suitable crosslinking agent is tris(alkoxy carbonylamino) triazine (available from Cytec Industries under the designation TACT). The curing agent may be a combination of these, particularly combinations that include aminoplast crosslinking agents. Aminoplast resins such as melamine formaldehyde resins or urea formaldehyde resins are especially preferred.

The coating composition may include a catalyst to enhance the cure reaction. Such catalysts are well known in the art and include, without limitation, zinc salts, tin salts, blocked or free para-toluenesulfonic acid, blocked or free dinonylnaphthalenesulfonic acid, or phenyl acid phosphate.

A solvent or solvents may be included in the coating composition. In general, the solvent can be any organic solvent and/or water. In one preferred embodiment, the solvent includes a polar organic solvent. More preferably, the solvent includes one or more organic solvents selected from polar aliphatic solvents or polar aromatic solvents. Still more preferably, the solvent includes a ketone, ester, acetate, or a combination of any of these. Examples of useful solvents include, without limitation, methyl ethyl ketone, methyl isobutyl ketone, m-amyl acetate, ethylene glycol butyl ether-acetate, propylene glycol monomethyl ether acetate, xylene, N-methylpyrrolidone, blends of aromatic hydrocarbons, and mixtures of these. In another preferred embodiment, the solvent is water or a mixture of water with small amounts of cosolvents. In general, protic solvents such as alcohol and glycol ethers are avoided when the coating composition includes the optional polyisocyanate crosslinker, although small amounts of protic solvents can be used even though it may be expected that some reaction with the isocyanate groups may take place during curing of the coating.

Additional agents, for example hindered amine light stabilizers, ultraviolet light absorbers, anti-oxidants, surfactants, stabilizers, wetting agents, rheology control agents, dispersing agents, adhesion promoters, etc. may be incorporated into the coating composition. Such additives are well known and may be included in amounts typically used for coating compositions.

The clearcoat coating composition is applied as the other layer of an automotive composite color-plus-clear coating. The pigmented basecoat composition over which it is applied may be any of a number of types well known in the art, and does not require explanation in detail herein. Polymers known in the art to be useful in basecoat compositions include acrylics, vinyls, polyurethanes; polycarbonates, polyesters, alkyds, and polysiloxanes. Preferred polymers include acrylics and polyurethanes. In one preferred embodiment of the invention, the basecoat composition also utilizes a carbamate-functional acrylic polymer. Basecoat polymers may be thermoplastic, but are preferably crosslinkable and comprise one or more type of crosslinkable functional groups. Such groups include, for example, hydroxy, isocyanate, amine, epoxy, acrylate, acid, anhydride, vinyl, silane, and acetoacetate groups. These groups may be masked or blocked in such a way so that they are unblocked and available for the crosslinking reaction under the desired curing conditions, generally elevated temperatures. Preferred crosslinkable functional groups include hydroxy functional groups and amino functional groups.

Basecoat polymers may be self crosslinkable, or may require a separate crosslinking agent that is reactive with the functional groups of the polymer. When the polymer comprises hydroxy functional groups, for example, the crosslinking agent may be an aminoplast resin, isocyanate and blocked isocyanates (including isocyanurates), and acid or anhydride functional crosslinking agents.

The clearcoat coating composition of this invention is generally applied wet-on-wet over a basecoat coating composition layer as is widely done in the industry. The clearcoat coating compositions can be coated on a substrate by spray coating. Electrostatic spraying is a preferred method. The coating composition can be applied in one or more passes to provide a film thickness after cure of typically from about 20 to about 100 microns.

After application of the coating composition to the substrate, the coating is cured, preferably by heating at a temperature and for a length of time sufficient to cause the reactants to form an insoluble polymeric network. The cure temperature is usually from about 105° C. to about 175° C., and the length of cure is usually about 15 minutes to about 60 minutes. Preferably, the coating is cured at about 120° C. to about 150° C. for about 20 to about 30 minutes. Heating can be done in infrared and/or convection ovens.

The coating composition can be applied onto many different types of substrates, including metal substrates such as bare steel, phosphated steel, galvanized steel, or aluminum; and non-metallic substrates, such as plastics and composites. Besides the basecoat coating layer, the substrate may also have a primer layer, such as a layer of an electrodeposited primer and/or primer surfacer, uncured or, preferably, cured.

The invention is further described in the following examples. The examples are merely illustrative and do not in any way limit the scope of the invention as described and claimed. All parts are parts by weight unless otherwise noted.

### Examples

### Example 1. Synthesis of a carbamate acrylic polymers 1A, 1B, and 1C

A mixture of 620.1g methacrylic acid, 1648 g of 2-hydroxyethyl methacrylate, 451 g of cyclohexyl methacrylate, and 182 g Aromatic 100 solvent was added over four hours simultaneously with a solution of 436.3 g of azobis(2-methylbutanenitrile) in 748.6 g of Aromatic 100 solvent to a mixture of 1874.4 g of CARDURA E (glycidyl neodecanoate, supplied by Resolution Performance Products), 951 g of methyl carbamate, and 844 g of Aromatic 100 solvent in a reactor held at 140° C. After the addition, a mixture of 32 g of azobis(2-methylbutanenitrile) in 66 g of toluene was added over 30 minutes. Then, 95 g of toluene was added as a rinse of the addition line, and the product was maintained at 140° C for an additional hour to complete the conversion to product. At the end of the one hour hold, the reactor was cooled to 120° C. The product had a measured hydroxyl equivalence of 238g nonvolatiles (NV) per eq hydroxyl or hydroxyl number 236 mg KOH/g/NV.

Next, 16 g of monobutyl stannoic acid (BSA) and 560 g of toluene were loaded and the reactor heated to, and held at, 125 - 130°C. By-product methanol was azeotropically removed with toluene, and the extent of trans-carbamation (addition of methyl carbamate to the polymer) was followed by measuring the hydroxyl number. Reaction portions of 1700 g each were removed when the hydroxyl number of the product measured at 150 mg KOH/g/NV (Example 1A), 136 mg KOH/g/NV (Example 1B), and 96 mg KOH/g/NV (Example 1C). At these hydroxyl numbers, about 36%, (Example 1A) 42% (Example 1B), and 66% (Example 1C) of all the hydroxyl groups have been trans-carbamated. The removed products were connected to vacuum and the solvent and excess methyl carbamate were removed. At the end of the vacuum strip, 700 g of propylene glycol monomethyl ether were added to provide a carbamate acrylic resin product (Examples 1A, 1B, and 1C, respectively) at about 70% non-volatiles.

### Example 2. Synthesis of a hydroxy acrylic polymer

A mixture of 12.4 g acrylic acid, 48.2 g of 2-hydroxyethyl methacrylate, 16.6 g of 2-ethylhexyl acrylate, 8 g of styrene, 42 g of n-butyl methacrylate, and 7.4 g of methyl methacrylate was added over 4 hours simultaneously with a solution of 12.4 g of tert.-butyl peroxy 2-ethylhexanoate and 6 g of tert.-butyl peroxy acetate in 2 g of propylene glycol monopropyl ether to 25 g of propylene glycol monopropyl ether in a reactor at 150° C. After the addition, the product was maintained at 140° C for an additional hour to complete the conversion of monomer to polymer. 30 g of methyl propyl ketone was added to bring the resin to a 65% non-valatile solution. Theoretical Tg was calculated to be 23.4°C, measured equivalent weight was 330 g / equivalent hydroxyl, and measured GPC molecular weight was Mn 3300, Mw 5850, and polydispersity 1.8.

### Example 3. Preparation of star polyester carbamate

A mixture of 628 g of hexahydrophthalic anhydride, 257 g of xylene, and 173 g of pentaerythritol was reacted at 125-135° C until the acid number was 220 mg KOH/g/NV. Then, 1020 g of glycidyl neodeconoate was added to the reaction mixture, keeping the exotherm below 135°C. The temperature was maintained at 135° C until the measured acid number was below 3 mg KOH/g NV. To the reaction mixture, 430 g of methyl carbamate, 310 g of toluene, and 4.6 g of dibutyl tin dioxide were added and the whole mixture heated to 124 -128° C. Methanol was removed as an azeotrope with toluene until the measured hydroxyl number was below 20 mg KOH/g/NV. The reactor was then connected to vacuum to remove the solvent and residual methyl carbamate from the product. 700 g of aromatic 100 was added to the product, the final solids content being 74% by weight.

### Example 4. Preparation of dimer fatty alcohol silane

270 g of C-36 dimer fatty alcohol from Uniquema (sold under the trade name Pripol 2030) was mixed with 205 g of Silquest® A-link 35 silane (3-isocyanatopropyl, trimethoxy silane), 0.2 g of dibutyl tin acetate, and 100 g of aromatic 100. The mixture was heated to 80° C until infrared spectrometric analysis as well as wet titration showed the total absence of isocyanate functionality (about 2 hours). The product was an 82.6% by weight nonvolatile solution with an equivalent weight of 158g per equivalent methoxy group.

### Example 5. Preparation of Coating Compostiions

Coating compositions were prepared by combining the materials in the following table. Amounts are given in parts by weight.

| Ingredients | Example | Example | Example | Example | Example |
|---|---|---|---|---|---|
| | 5A | 5B | 5C | 5D | 5E |
| Example 1A | 88 | | | | |
| Example 1B | | 88 | | | |
| Example 1C | | | 109.1 | | |
| Example 2 | | | | | 84.5 |
| Example 3 | | | | 111.6 | |
| Example 4 | 39.5 | 27.9 | 13.8 | 7.4 | 1.3 |
| CYMEL 327¹ | 3.9 | 8 | 5.5 | 14.3 | 11.6 |
| Additives² | 6 | 6 | 6 | 6 | 6 |
| methyl propyl | 7.2 | 14.8 | 10.1 | 5.4 | 6 |
| ketone | | | | | |

| | | | | | |
|---|---|---|---|---|---|
| 1. CYMEL 327 is available from Cytec Industries. 2. The additives included flow and rheology control agents, catalysts, leveling agents, and solvent. | | | | | |

Coating compositions 5A to 5E were tested in the following ways. The nonvolatile content was measured. The coating composition examples were sprayed over steel panels coated with an electrodeposition primer, 1 mil (25.4 µm) of a spray primer (U28 primer supplied by BASF), and 15.2 µm (0.6 mil) of waterborne black basecoat E54KW225 (supplied by BASF) and baked for 20 minutes at 285° F (140° C). The cured coating film was about 1.8 mils (45.7 µm) thick. The extent of cure was measured by methyl,ethyl ketone double rubs according to ASTM method D5402. The hardness of the cured coating was measured as Fisher hardness according to DIN 50359, using a Fisherscope hardness tester model HM100V set for a maximum force of 100 mN ramped in series of 50,1 second steps. Hardness was recorded in N/mm. A Crockmeter was used to test the scratch and mar resistance of the cured coatings before and after 10 cycles testing and the gloss was measured with a HunterPro gloss meter, according to ASTM method D523.

| Coating | %NV by | MEK | Hardness | Initial | Gloss |
|---|---|---|---|---|---|
| Composition | weight | doublerubs | HU | Gloss | retention |
| Example 5A | 70 | 60 | 42 | 84 | 96% |
| Example 5B | 66 | >100 | 75 | 75 | 97% |
| Example 5C | 63 | >100 | 84 | 70 | 87% |
| Example 5D | 64 | >100 | 112 | 69 | 87% |
| Example 5E | 56 | >100 | 101 | 49 | 75% |

## Claims

1. A curable clearcoat coating composition, comprising:
(a) an acrylic polymer having active hydrogen-containing functional groups;
(b) silylated dimer fatty alcohol diol; and
(c) a crosslinker reactive with the acrylic polymer.

2. A curable clearcoat coating composition according to claim 1, wherein the silylated dimer fatty alcohol diol is the reaction product of dimer fatty alcohol diol and an isocyanatoalkyltrialkoxysilane.

3. A curable clearcoat coating composition according to claim 1, wherein the hydrogen-containing functional groups are selected from the group consisting of hydroxyl groups, acid groups, carbamate groups, terminal urea groups, and combinations thereof.

4. A curable clearcoat coating composition according to claim 1, wherein the hydrogen-containing functional groups are selected from the group consisting of hydroxyl groups, carbamate groups, and combinations thereof.

5. A curable clearcoat coating composition according to claim 1, wherein the crosslinker comprises an aminoplast.

6. A curable clearcoat coating composition according to claim 5, wherein the aminoplast crosslinker comprises a hexamethoxymethylated melamine resin.

7. A curable clearcoat coating composition according to claim 1, wherein the crosslinker comprises an isocyanate crosslinker.

8. A method of coating a substrate, comprising steps of:
(a) applying to the substrate a layer of curable clearcoat coating composition according to claims 1 and
(b) curing the applied layer of clearcoat coating composition.

9. A method of coating a substrate according to claim 8, wherein the layer of curable clearcoat coating composition is applied over a basecoat coating layer.

10. A coated substrate prepared according to the method of claim 8.

11. A coated substrate prepared according to the method of claim 9.

12. A method of increasing the gloss of a cured clearcoat layer obtained from curing a clearcoat composition, comprising a step of adding from 1% to 10% by weight of a silylated dimer fatty alcohols diol to the clearcoat composition.

## Patentansprüche

1. Härtbare Klarlackbeschichtungszusammensetzung, enthaltend:
(a) ein Acrylpolymer mit aktiven Wasserstoff enthaltenden funktionellen Gruppen;
(b) silyliertes Dimerfettalkoholdiol und
(c) einen gegenüber dem Acrylpolymer reaktiven Vernetzer.

2. Härtbare Klarlackbeschichtungszusammensetzung nach Anspruch 1, bei der es sich bei dem silylierten Dimerfettalkoholdiol um das Umsetzungsprodukt von Dimerfettalkoholdiol und einem Isocyanatoalkyltrialkoxysilan handelt.

3. Härtbare Klarlackbeschichtungszusammensetzung nach Anspruch 1, bei der die Wasserstoff enthaltenden funktionellen Gruppen aus der Gruppe bestehend aus Hydroxylgruppen, Säuregruppen, Carbamatgruppen, endständigen Harnstoffgruppen und Kombinationen davon ausgewählt sind.

4. Härtbare Klarlackbeschichtungszusammensetzung nach Anspruch 1, bei der die Wasserstoff enthaltenden funktionellen Gruppen aus der Gruppe bestehend aus Hydroxylgruppen, Carbamatgruppen und Kombinationen davon ausgewählt sind.

5. Härtbare Klarlackbeschichtungszusammensetzung nach Anspruch 1, bei der der Vernetzer einen Aminoplast umfaßt.

6. Härtbare Klarlackbeschichtungszusammensetzung nach Anspruch 5, bei der der Aminoplast-Vernetzer ein hexamethoxymethyliertes Melaminharz umfaßt.

7. Härtbare Klarlackbeschichtungszusammensetzung nach Anspruch 1, bei der der Vernetzer einen Isocyanat-Vernetzer umfaßt.

8. Verfahren zum Beschichten eines Substrats, bei dem man:
(a) auf das Substrat eine Schicht der härtbaren Klarlackbeschichtungszusammensetzung gemäß Anspruch 1 aufbringt und
(b) die aufgebrachte Schicht der Klarlackbeschichtungszusammensetzung härtet.

9. Verfahren zum Beschichten eines Substrats nach Anspruch 8, bei dem man die Schicht der härtbaren Klarlackbeschichtungszusammensetzung über einer Basislackbeschichtungsschicht aufbringt.

10. Beschichtetes Substrat, hergestellt nach dem Verfahren gemäß Anspruch 8.

11. Beschichtetes Substrat, hergestellt nach dem Verfahren gemäß Anspruch 9.

12. Verfahren zur Erhöhung des Glanzes einer durch Härten einer Klarlackzusammensetzung erhaltenen Klarlackschicht, bei dem man der Klarlackzusammensetzung 1 bis 10 Gew.-% eines silylierten Dimerfettalkoholdiols zusetzt.

## Revendications

1. Composition de revêtement durcissable à couche transparente, comprenant :
(a) un polymère acrylique renfermant des groupes fonctionnels à hydrogène actif ;
(b) un diol d'alcool gras dimère silylé ; et
(c) un agent de réticulation réactif vis-à-vis du polymère acrylique.

2. Composition de revêtement durcissable à couche transparente selon la revendication 1, dans laquelle le diol d'alcool gras dimère silylé est le produit de réaction d'un diol d'alcool gras dimère et d'un isocyanatoalkyltrialcoxysilane.

3. Composition de revêtement durcissable à couche transparente selon la revendication 1, dans laquelle les groupes fonctionnels à hydrogène sont choisis parmi le groupe constitué de groupes hydroxyle, de groupes acide, de groupes carbamate, de groupes urée terminaux et de leurs combinaisons.

4. Composition de revêtement durcissable à couche transparente selon la revendication 1, dans laquelle les groupes fonctionnels à hydrogène sont choisis parmi le groupe constitué de groupes hydroxyle, de groupes carbamate et de leurs combinaisons.

5. Composition de revêtement durcissable à couche transparente selon la revendication 1, dans laquelle l'agent de réticulation comprend un aminoplaste.

6. Composition de revêtement durcissable à couche transparente selon la revendication 5, dans laquelle l'agent de réticulation aminoplaste comprend une résine de mélamine hexaméthoxyméthylée.

7. Composition de revêtement durcissable à couche transparente selon la revendication 1, dans laquelle l'agent de réticulation comprend un agent de réticulation isocyanate.

8. Procédé de revêtement d'un substrat, comprenant les étapes consistant à :
(a) appliquer sur le substrat une couche de composition de revêtement durcissable à couche transparente selon la revendication 1, et
(b) durcir la couche appliquée de composition de revêtement durcissable.

9. Procédé de revêtement d'un substrat selon la revendication 8, dans lequel la couche de composition de revêtement durcissable à couche transparente est appliquée par-dessus une couche de revêtement à couche de fond.

10. Substrat revêtu préparé conformément au procédé selon la revendication 8.

11. Substrat revêtu préparé conformément au procédé selon la revendication 9.

12. Procédé pour accroître la brillance d'une couche transparente durcie obtenue par le durcissement d'une composition de couche transparente, comprenant une étape d'addition de 1 % à 10 % en poids d'un diol d'alcool gras dimère silylé à la composition de couche transparente.
